Europäisches Patentamt

European Patent Office

Office européen des brevets

(11) Veröffentlichungsnummer: **0 199 907**
**B1**

(12) **EUROPÄISCHE PATENTSCHRIFT**

(45) Veröffentlichungstag der Patentschrift:
27.09.89

(21) Anmeldenummer: **86101644.2**

(22) Anmeldetag: **08.02.86**

(51) Int. Cl.⁴: **F 16 C 3/06,** F 16 C 3/20

(54) **Kurbelwelle für eine Kolbenbrennkraftmaschine.**

(30) Priorität: **11.04.85 CH 1550/85**

(43) Veröffentlichungstag der Anmeldung:
**05.11.86 Patentblatt 86/45**

(45) Bekanntmachung des Hinweises auf die Patenterteilung:
**27.09.89 Patentblatt 89/39**

(84) Benannte Vertragsstaaten:
**GB IT**

(56) Entgegenhaltungen:
**CH-A- 567 194**
**FR-A- 514 635**
**FR-A- 584 262**
**GB-A- 1 090 446**

(73) Patentinhaber: **GEBRÜDER SULZER AKTIENGESELLSCHAFT, Zürcherstrasse 9, CH-8401 Winterthur (CH)**

(72) Erfinder: **Aeberli, Kaspar Hans, Hochrütistrasse 8, CH-8304 Wallisellen (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf 1 (DE)**

## Beschreibung

Die Erfindung betrifft eine Kurbelwelle für eine Kolbenbrennkraftmaschine mit paarweise angeordneten Kurbelwangen und mit Hohlkehlen an den Kurbelzapfen.

Bei solchen bisherigen Kurbelwellen sind die Kurbelwangen im Bereich der Kurbelzapfen verhältnismäßig breit. Dies hat den Nachteil, daß die freie rotierende Massenkraft der Kurbel verhältnismäßig groß ist.

Derartige Kurbelwellen werden z.B. in der FR 514 635 und der CH 567 194 beschrieben.

Aufgabe der Erfindung ist es, die eingangs genannte Kurbelwelle so zu verbessern, daß die Massenkräfte reduziert werden und somit auch die Laufruhe der Kolbenbrennkraftmaschine verbessert wird.

Diese Aufgabe wird erfindungsgemäß dadurch gelöst, daß wenigstens eine Kurbelwange einen hauptlagerseitigen Absatz aufweist, welcher sich in einem Bereich gegenüber der Hohlkehle des Kurbelzapfens befindet, und daß die Kurbelwange sich nach dem Kurbelzapfen hin verjüngend ausgebildet ist.

Durch die Verjüngung weist die Kurbelwange, von der Seite gesehen, im Bereich des Kurbelzapfens eine wesentlich geringere Breite auf als bisher. Hierdurch lassen sich die freien Massenkräfte bei der Rotation wesentlich reduzieren. Gleichzeitig wird durch die gegenüberliegende Anordnung von Absatz und Hohlkehle eine ungeminderte Festigkeit der Kurbelwelle erreicht. Die Spannung in der Hohlkehle des Kurbelzapfens wird gleichbleibend gehalten oder sogar reduziert.

Nach einer besonders vorteilhaften Ausführung der Erfindung kann wenigstens eine Kurbelwange gegen die andere geknickt sein und es kann der Abstand benachbarter Kurbelwangen im Bereich der Absätze geringer sein als die Hauptlagerbreite. Hierdurch läßt sich die Zylinderdistanz in Längsrichtung des Motors verkürzen und somit eine Reduktion der Einbaumasse desselben erreichen.

Die nähere Erläuterung der Erfindung erfolgt anhand von Ausführungsbeispielen in Verbindung mit nachstehender Zeichnung. Es zeigen:

Fig. 1a eine Ansicht einer Kurbelwelle gemäß dem Stand der Technik,

Fig. 1b eine Seitenansicht gemäß Pfeil Ib nach Fig. 1a,

Fig. 2a ein Ausführungsbeispiel einer erfindungsgemäßen Kurbelwelle,

Fig. 2b eine entsprechende Seitenansicht gemäß Pfeil IIb nach Fig. 2a,

Fig. 3 eine Ansicht eines zweiten Ausführungsbeispiels einer erfindungsgemäßen Kurbelwelle,

Fig. 4 eine perspektivische Darstellung einer Variante gemäß Fig. 3.

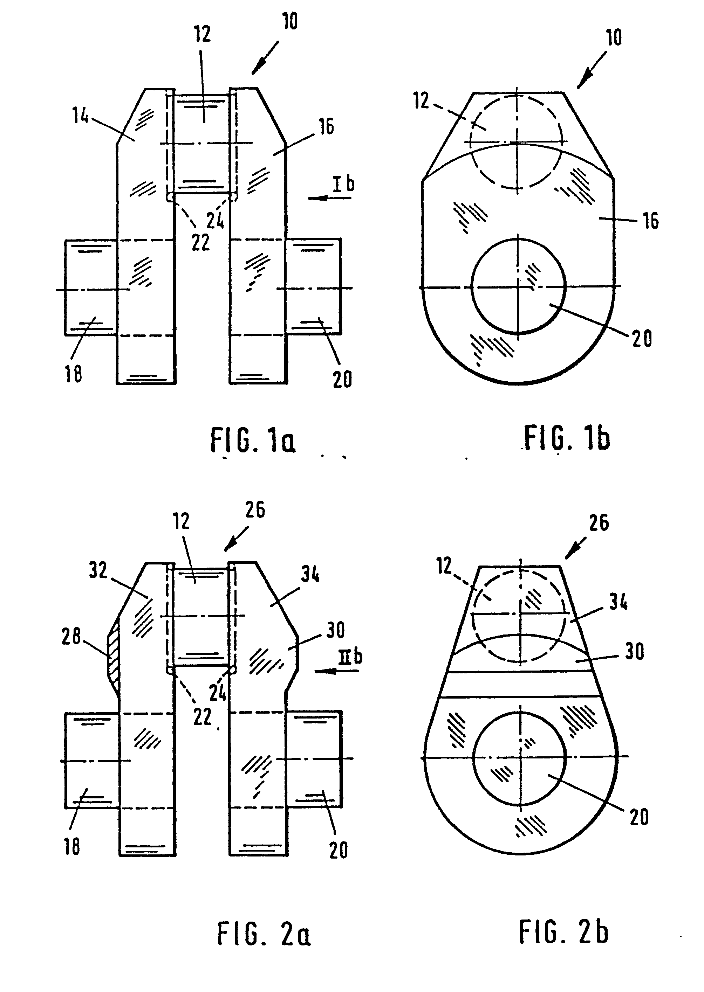

Eine dem Stand der Technik entsprechende Kurbelwelle 10 (Fig. 1a, 1b) weist einen Kurbelzapfen 12, Kurbelwangen 14, 16 und Wellenzapfen 18, 20 auf, welche in üblicher Art und Weise in nichtdargestellten Hauptlagern gelagert sind. Die Hohlkehlen des Kurbelzapfens 12 sind mit 22, 24 bezeichnet.

Bei der erfindungsgemäßen Kurbelwelle 26 (Fig. 2a, 2b) weisen demgegenüber die Kurbelwangen 32, 34 jeweils einen hauptlagerseitigen Absatz 28, 30 auf, und die Kurbelwangen 32, 34 sind nach dem Kurbelzapfen 12 hin sich verjüngend ausgebildet. Hierdurch lassen sich die Massenkräfte bei der Rotation reduzieren. Wie aus Fig. 2a hervorgeht, befindet sich der jeweilige Absatz 28, 30 axial gegenüber der Hohlkehle 22 bzw. 24, womit die Spannung in der Hohlkehle gleichbleibend gehalten oder reduziert wird.

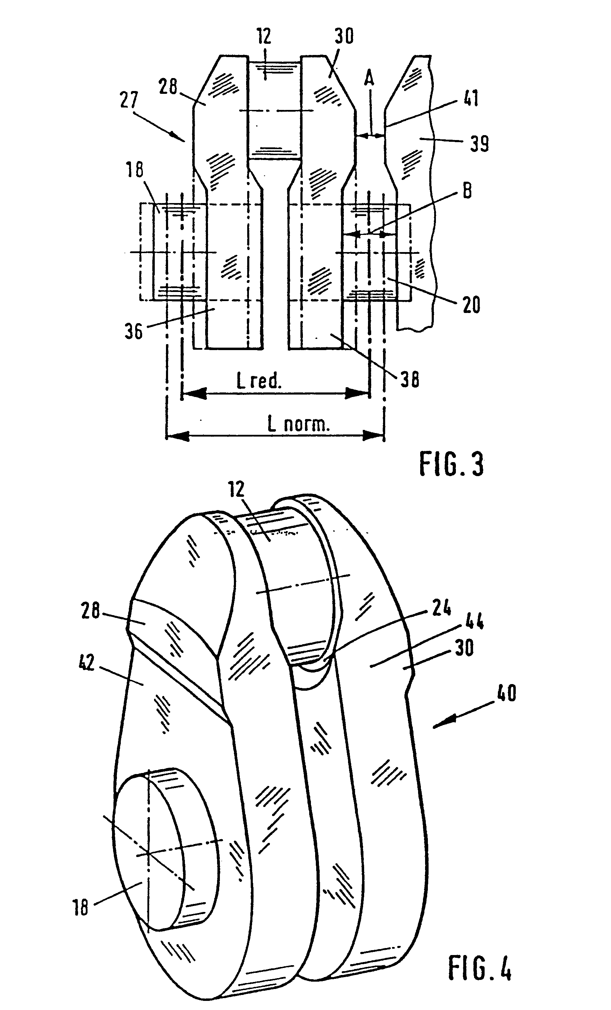

Beim Ausführungsbeispiel nach Fig. 3 sind die Kurbelwangen 36, 38 gegeneinander geknickt. Wie aus Fig. 3 hervorgeht, läßt sich hierdurch die normale Zylinderdistanz ($L_{norm}$) auf einen Wert ($L_{red}$) verringern, so daß die Motorlänge entsprechend verkürzt wird.

Wie aus Fig. 3 hervorgeht, ist dabei der Abstand A zwischen der Kurbelwange 38 und der benachbarten Kurbelwange 39 im Bereich der Absätze 30, 41 geringer als die Hauptlagerbreite B.

Beim Ausführungsbeispiel nach Fig. 4 sind die Merkmale der beiden vorgenannten Ausführungsbeispiele in der Kurbelwelle 40 kombiniert, d. h. die Kurbelwangen 42, 44 mit den Absätzen 28, 30 sind in Richtung zum Kurbelzapfen 12 hin verjüngt und gegeneinander geknickt. Hierdurch wird eine optimale Kombination von Laufruhe, reduziertem Trägheitsmoment, günstigen Spannungsverhältnissen und platzsparender Bauart erreicht.

## Patentansprüche

1. Kurbelwelle (26, 27, 40) für eine Kolbenbrennkraftmaschine mit paarweise angeordneten Kurbelwangen (32, 34, 36, 38, 42, 44) und mit Hohlkehlen (22, 24) an den Kurbelzapfen (12), dadurch gekennzeichnet, daß wenigstens eine Kurbelwange (32, 34; 36, 38; 42, 44) einen hauptlagerseitigen Absatz (28, 30) aufweist, welcher sich in einem Bereich gegenüber der Hohlkehle (22, 24) des Kurbelzapfens (12) befindet, und daß die Kurbelwange (32, 34) sich nach dem Kurbelzapfen (12) hin verjüngend ausgebildet ist.

2. Kurbelwelle nach Anspruch 1, dadurch gekennzeichnet, daß jeweils wenigstens eine Kurbelwange (36, 38; 42, 44) gegen die andere geknickt ist, und daß der Abstand (A) benachbarter Kurbelwangen (38, 39) im Bereich der Absätze (30, 41) geringer ist als die Hauptlagerbreite (B).

## Claims

1. A crankshaft (26, 27, 40) for a reciprocating internal combustion engine and having paired crank webs (32, 34, 36, 38, 42, 44) and fillets (22, 24) at the crankpins (12), characterised in that at least one crank web (32, 34; 36, 38; 42, 44) has a shoulder (28, 30) on the main bearing side, such shoulder (28, 30) being disposed in a zone opposite the fillet (22, 24) of the crankpin (12), and the crank web (32, 34) tapers towards the crankpin (12).

2. A crankshaft according to claim 1, characterised in that at least one crank web (36, 38; 42, 44) is necked down relatively to the other, and the distance (A) between adjacent crank webs (38, 39) in the zone of the shoulders (30, 41) is less than main bearing width (B).

## Revendications

1. Vilebrequin (26, 27, 40) pour moteur à combustion interne à pistons présentant des bras (32, 34, 36, 38, 42, 44) disposés par paires et avec des gorges (22, 24) prévues sur le maneton (12) de vilebrequin, caractérisé en ce qu'au moins un bras de vilebrequin (32, 34; 36, 38; 42, 44) présente un épaulement (28, 30) du côté du palier principal, qui se trouve dans une zone en face de la gorge (22, 24) du maneton (12) de vilebrequin, et en ce que le bras de vilebrequin (32, 34) va en se rétrécissant dans la direction du maneton (12).

2. Vilebrequin suivant la revendication 1, caractérisé en ce que dans chaque cas, au moins un bras de vilebrequin (36, 38; 42, 44) est infléchi vers l'autre, et en ce que la distance (A) de bras voisins (38, 39) est plus faible dans la zone des épaulements (30, 41) que la largeur (B) du palier principal.

FIG. 1a

FIG. 1b

FIG. 2a

FIG. 2b

FIG. 3

FIG. 4